# EUROPEAN PATENT SPECIFICATION

(11) **EP 3 885 077 B1**
(45) Date of publication and mention of the grant of the patent: **14.08.2024**
(21) Application number: 18940501.2
(22) Date of filing: 29.12.2018
(51) Int. Cl.: G05D 1/00, B25J 5/00, G01S 17/48

(54) **ROBOT SENSOR ARRANGEMENT SYSTEM**
ROBOTERSENSORANORDNUNGSSYSTEM
SYSTÈME D'ARRANGEMENT DE CAPTEUR DE ROBOT

(30) Priority: 19.11.2018 CN 201821895318 U
(43) Date of publication of application: 29.09.2021
(73) Proprietor: Syrius Robotics Co., Ltd., Shenzhen, Guangdong 518055 (CN)
(72) Inventor: YANG, Zhiqin, Shenzhen, Guangdong 518000 (CN)
(74) Representative: Berggren Oy
(86) International application number: PCT/CN2018/125146
(87) International publication number: WO 2020/103297

(56) References cited:
- EP-B1- 2 590 042
- CN-A- 102 596 517
- CN-A- 105 222 724
- CN-A- 105 910 604
- CN-A- 105 928 514
- CN-A- 106 406 311
- CN-A- 106 843 491
- CN-A- 107 850 436
- CN-A- 108 098 799
- IN-A- 201721 015 920
- US-A1- 2016 188 977

## Description

### Technical Field

The present invention relates to the field of robot sensing technology, and in particular relates to a robot sensor arrangement system.

### Background

In the field of goods circulation, AGV (Auto Guided Vehicle) is often used to receive, transport and unload goods. Since the degree of intelligence of the AGV is lower than that of an intelligent mobile robot, the number of sensors arranged on the body of the AGV is relatively small. Generally, an image sensor used to identify the graphic code of a landmark and a magnetic sensor used to read information such as the magnetic strength of a magnetic stripe on the body of the AGV can realize an information sensing function.

Different from the AGV, the body of the robot is equipped with multiple types of sensors, including a laser sensor for collecting a distance, an image sensor for obtaining information about the surrounding environment, a depth image sensor for collecting three-dimensional structure, etc., as well as an ultrasonic ranging sensor for non-optical collection, etc. Said multiple types of sensors form a robot sensing system, allowing the robot to perceive the environment and perform tasks autonomously.

Although the existing robot sensing system can make the robot autonomously perceive the environment and perform tasks, the arrangement of its sensor assembly is not reasonable enough, so that the sensor assembly has many blind areas and low cooperation degree, which results in low accuracy of the fusion algorithm of the sensor assembly and low robustness of the sensing system. Among others, robustness comes from English Robustness, which refers to the capability of the system to avoid abnormalities and recover from abnormal conditions. Robustness embodied in the robot mainly refers to the robot cognitive capability to the surrounding environment. If the cognitive capability is high, the possibility of avoiding mistakes such as collision of the robot is high. Therefore, when arranging the sensor assembly for the robot, it is necessary to minimize the blind areas of the sensors to improve the robustness of the robot. In addition, there are multiple sensors in the sensor assembly that collect the same quantity. For example, the laser ranging sensor and the ultrasonic ranging sensor collect the distance from an obstacle around the robot to the robot itself at the same time. The low cooperation degree of the multiple sensors which collect the same physical quantity will reduce the accuracy of the multi-sensor fusion algorithm, which is not conducive to the robot's autonomous perception of the environment and execution of tasks.

In summary, the existing robot sensing system has a technical problem that the sensor assembly has many sensing blind areas and the cooperation degree is low.

US2016188977A1 discloses a robot patrolling an environment may sense the presence of a person within that environment using one or more sensors, such as a proximity sensor and/or an imagining sensor of a sensor module in communication with a controller system (also referred to as a controller) of the robot. In some implementations, the sensor system includes an odometer and/or an angular rate sensor (e.g., gyroscope or the IMU) for sensing a distance traveled by the robot.

### Summary

In view of this, the purpose of the present invention is to provide a robot sensor arrangement system to solve the technical problem that the robot sensing system has many blind areas of a sensor assembly and low cooperation degree.

In order to solve the above technical problem, the embodiments of the present invention provide a robot sensor arrangement system. The robot sensor arrangement system includes a robot body on which at least one sensor assembly is arranged, and the sensor assembly includes an image sensor and a first inertial sensor of which the position relative to the image sensors is fixed.

The included angle between the positions of the image sensor and a vertical axis is in a first angle range.

In the robot sensor arrangement system provided by the embodiments of the present invention, at least one sensor assembly is arranged on the robot body, wherein the sensor assembly comprises an image sensor and a first inertial sensor, and the positions of the image sensor relative to the first inertial sensor are fixed such that the image sensors and the first inertial sensor do not move as external physical conditions such as vibration and temperature change. The included angle between the positions of the image sensor and the vertical axis is in the first angle range to ensure that the robot autonomously perceives the surrounding environment and improve the capability of autonomous obstacle avoidance and the robustness of the robot system.

### Brief Description of the Drawings

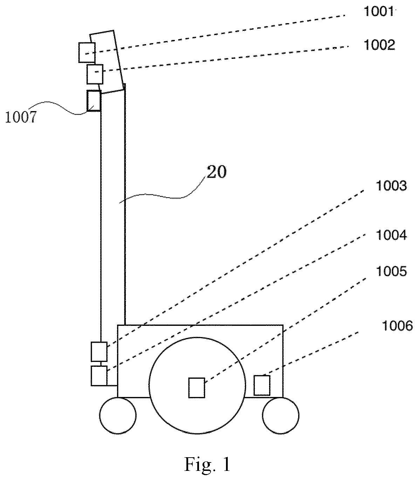

Fig.1 is a schematic structural diagram of a robot sensor arrangement system provided in an embodiment.

### Detailed Description of Embodiments

In order to make the objectives, technical solutions, and advantages of the embodiments of the present invention clearer, the following further describes the embodiments of the present invention in detail with reference to the accompanying drawings and embodiments. It should be understood that the specific embodiments described here are only used to explain the embodiments of the present invention, and are not used to limit the embodiments of the present invention. In the description of the embodiments of the present invention, it should be noted that the orientation or positional relationship indicated by the terms "center", "upper", "lower", "left", "right", "vertical", "horizontal", "inner", "outer" and so on is based on the orientation or positional relationship shown in the drawings, and is only for the convenience of describing the embodiments of the present invention and simplifying the description, and does not indicate or imply that the device or element must have a specific orientation, be constructed and operated in a specific orientation, and therefore cannot be understood as a limitation to the embodiments of the present invention.

In addition, in the description of the embodiments of the present invention, unless otherwise clearly specified and limited, the terms "installed", "connected", and "connection" should be interpreted broadly. For example, it may be a fixed or detachable connection, or integral connection; it may be a mechanical connection or electrical connection; it can be directly connected or indirectly connected through an intermediate medium, or it can be the internal connection of two components; and it can be a wireless connection or a wired connection. For those of ordinary skill in the art, the specific meanings of the above-mentioned terms in the embodiments of the present invention can be understood according to specific situations.

In addition, the technical features involved in the different implementations of the embodiments of the present invention described later can be combined with each other as long as they do not conflict with each other.

In the following, the embodiments of the present invention propose some preferred embodiments to teach those skilled in the art to implement.

FIG.1 is a schematic structural diagram of a robot sensor arrangement system provided by an embodiment, and shows a robot sensor arrangement system.

Referring to Figure 1, a robot sensor arrangement system comprises a robot body 20 on which at least one sensor assembly is arranged, wherein the sensor assembly includes image sensors (1001, 1002) and a first inertial sensor 1007 of which the position relative to the image sensors (1001, 1002) is fixed.

The included angle between the positions of the image sensor (1001, 1002) and a vertical axis is in a first angle range, so as to ensure that the similar texture structures of a ground peripheral image are continuously collected.

In this embodiment, at least one sensor assembly is arranged on the robot body 20, wherein the sensor assembly includes the image sensors (1001, 1002) and the first inertial sensor 1007, and the positions of the image sensor (1001, 1002) relative to the first inertial sensor 1007 are fixed such that the image sensors (1001, 1002) and the first inertial sensor 1007 do not move as external physical conditions, such as vibration and temperature change. The included angle between the positions of the image sensor (1001, 1002) and the vertical axis is in the first angle range to ensure that the robot can autonomously perceive the surrounding environment to improve the capability of autonomous obstacle avoidance and the robustness of the robot system.

It should be noted that since the positions of the image sensor (1001, 1002) relative to the first inertial sensor 1007 are fixed and do not change as the external physical conditions such as the vibrations and temperature change, the information collected for the determined position can be controlled wherein each sensor is responsible for its own collection scope, and then the collected information is sent to the robot system to improve the fusion calculation and to form a stable division of labor and cooperation, so that the accuracy of the sensor fusion algorithm is improved and the robustness of the robot is improved, which is conducive to the robot's autonomous perception of the environment and execution of tasks.

It should also be noted that the included angle between the positions of the image sensor (1001, 1002) and the vertical axis is in the first angle range, so as to ensure that the similar texture structures of the ground peripheral image are continuously collected. Among others, the first angle range may be 5° - 90°, preferably the angle value may be 10°

The video frames collected by the image sensors (1001, 1002) are analyzed to calculate the position and posture changes of the robot. In this process, there are certain requirements for the continuity of the video frames, and the continuity of the video frames comes from the continuous shooting of similar texture structures. Therefore, the included angle between the positions of the image sensor (1001, 1002) and the vertical axis is in the first angle range.

In a specific embodiment, the image sensors (1001, 1002) and the first inertial sensor 1007 are fixed on at least one piece of rigid material to realize the positions of the image sensor (1001,1002) relative to the first inertial sensor 1007 being fixed. Among others, the rigid material refers to a material that does not deform due to changes in the external physical conditions such as the vibration and temperature. It should be understood that the rigid material fixing method is only a preferred embodiment for realizing the positions of the image sensor (1001, 1002) relative to the first inertial sensor 1007 being fixed.

Further, the image sensors (1001, 1002) include a visible light image sensor 1002 and a depth image sensor 1001 of which the position relative to the visible light image sensor 1002 is fixed. The distances from the depth image sensor 1001 and the visible light image sensor 1002 to the ground are in the first distance value range, so that the field of view covers the collection scope. The first distance value range is 50cm-160cm. The preferred value of the first distance value range is 80 cm.

It should be noted that the distances from the depth image sensor 1001 and the visible light image sensor 1002 to the ground are in the first distance value range, so that the field of view covers the collection scope, and the field of view of the depth image sensor 1001 and the visible light image sensor 1002 covers a large area. Among others, the FOV (Field Of View) of the depth image sensor 1001 and the visible light image sensor 1002 is a cone in space. When the robot is working indoors, the larger the FOV, the larger the collection scope of the depth image sensor 1001 and the visible light image sensor 1002. When the distances from the depth image sensor 1001 and the visible light image sensor 1002 to the ground are not less than 80 cm, an ideal FOV can be achieved.

It should be noted that the working principle of the depth image sensor 1001 is: using a triangle TOF(Time Of Flight) formed by a binocular camera or a triangle formed by a visible light or non-visible light emitting device and a receiving device to collect for obstacles and form multiple images of distances from several points on the obstacles to the sensors.

In addition, the image data collected by the depth image sensor 1001 and the visible light image sensor 1002 is transmitted to the robot in the form of video frames. By analyzing the image data, the robot can locate its position in space and perform three-dimensional reconstruction of the surrounding environment; Meanwhile, machine vision perception such as face recognition, human body recognition, obstacle recognition, car lane or sign recognition can also be performed by analyzing images.

Specifically, the visible light image sensor 1002 and the depth image sensor 1001 are fixed on at least one piece of rigid material, and the position of the visible light image sensor 1002 relative to the depth image sensor 1001 is fixed. Among others, the rigid material refers to a material that does not deform due to changes in external physical conditions such as vibration and temperature. It should be understood that the rigid material fixing method is only a preferred embodiment for realizing the position of the visible light image sensor 1002 relative to the depth image sensor 1001 being fixed.

In an improved embodiment, the sensor assembly includes: an optical ranging sensor 1004, a second inertial sensor 1006, and a mechanical odometer 1005 of which the relative positions are fixed.

The mechanical odometer 1005 is fixed inside the robot wheel; the optical ranging sensor 1004 and the second inertial sensor 1006 are on the same plane or the vertical distance therebetween is in a second distance value range. Specifically, the second distance value range is 0 - 40 cm. The preferred value of the second distance value range is 20 cm.

It should be noted that the second inertial sensor 1006 is used to collect the inertia of the robot body 20, the optical ranging sensor 1004 is used to collect the distances between the robot body 20 and surrounding objects, and the mechanical odometer 1005 is used to collect the moving amount with regard to the rotation speed of the robot's wheels. Among others, the second inertial sensor 1006 can generally measure the physical quantities of which the three positive directions of acceleration, angle velocity, and magnetic field are orthogonal.

In addition, since the relative positions of the optical ranging sensor 1004, the second inertial sensor 1006, and the mechanical odometer 1005 are fixed and do not change as the external physical conditions change, the collected information for the determined position can be controlled, and each sensor is responsible for its own collection scope, and the collected information is then sent to the robot system for improved fusion calculations to form a stable division of labor and cooperation, so that the accuracy of the sensor fusion algorithm and the robustness of the robot are improved, which is conducive to the robot's autonomous perception of the environment and execution of tasks.

In addition, the mechanical odometer 1005 is generally fixed on the shaft of the wheel, and the rotation speed of the wheel is obtained through grating or electromagnetic induction. The rotation speed can be converted into the linear speed of the wheel through the radius of the wheel.

In addition, the optical ranging sensor 1004 can be a laser ranging sensor. The laser ranging sensor is equipped with a laser emitting and receiving device, and the distance from the obstacle to the sensor is calculated through a triangle relationship or TOF.

In addition, the number of rotations of the wheel per unit time can only be accurately measured when the wheel is in full contact and friction with the ground, so that the radius of the wheel can be used to calculate the corresponding arc length based on the above measurement value, that is, the moving distance of the robot relative to the ground per unit time, therefore, the mechanical odometer 1005 needs to be in contact with the ground.

The optical ranging sensor 1004, the second inertial sensor 1006, and the mechanical odometer 1005 are fixed on at least one piece of rigid material, and the relative positions of the optical ranging sensor 1004, the second inertial sensor 1006 and the mechanical odometer 1005 can be fixed. Among others, the rigid material refers to a material that does not deform due to changes in external physical conditions such as vibration and temperature. It should be understood that the rigid material fixing method is only a preferred embodiment for realizing the relative positions of the optical ranging sensor 1004, the second inertial sensor 1006, and the mechanical odometer 1005 being fixed.

The optical ranging sensor 1004 and the second inertial sensor 1006 are on the same plane or the vertical distance thereof is in the second distance value range. The purpose thereof lies in: generally, the optical ranging sensor 1004 can only measure the measurement points on the same plane, and only if the measured values of the second inertial sensor 1006 are also from this plane or from a plane parallel to this plane, the measured values of the two sensors can be cross-referenced.

In an improved embodiment, the sensor assembly includes an ultrasonic sensor 1003 of which the position relative to the optical ranging sensor 1004 is fixed. The collection direction of the ultrasonic sensor 1003 is the same as that of the optical ranging sensor 1004. The position of the ultrasonic sensor 1003 is based on the scanning plane of the optical ranging sensor 1004, and the distance from the scanning plane is in the third distance value range, so that the ultrasonic sensor 1003 compensates for the insufficient sensing of a transparent object by the optical ranging sensor 1004. Specifically, the third distance value range is 0 - 40 cm. The preferred value of the third distance value range is 20 cm.

It should be noted that the ultrasonic sensor 1003 uses sound waves to estimate the distance from the obstacle to the robot. Different from the optical sensor, the measurement value of this type of sensor is relatively rough, and the measurement scope is generally a cone in the space, which has the characteristics of large coverage and coarse accuracy. More importantly, this type of sensor can measure obstacles that optical sensors cannot sense, such as glass.

It should also be noted that the third distance value range may be any distance value that enables the ultrasonic sensor 1003 to compensate for the insufficient sensing of the transparent object by the optical ranging sensor 1004. Among others, the third distance value range may be 0 - 40 cm. Among others, 20 cm is preferred.

It should also be noted that since the ultrasonic sensor 1003 and the optical ranging sensor 1004 are responsible for their own collection scopes, the ultrasonic sensor 1003 collects information about transparent objects, and then sends the collected information to the robot system for improved fusion calculations and forming a stable division of labor and cooperation, so that the accuracy of the sensor fusion algorithm and the robustness of the robot are improved, which is conducive to the robot's autonomous perception of the environment and execution of tasks.

In an improved embodiment, the sensors in the sensor assembly are all mounted on the rigid structure and constitute a whole by at least one piece of the rigid structure.

It should be noted that since the sensors in the sensor assembly are all mounted on the rigid structure and constitute a whole by at least one piece of the rigid structure, the relative positions of the sensors in the sensor assembly are fixed and do not change as the external physical conditions, such as vibration and temperature change, so the collected information of the determined position can be controlled wherein each sensor is responsible for its own collection scope, and then the collected information is sent to the robot system for improved fusion calculations to form a stable division of labor and cooperation, so that the accuracy of the sensor fusion algorithm is improved and the robustness of the robot is improved, which is conducive to the robot's autonomous perception of the environment and execution of tasks.

### Industrial applicability

In the robot sensor arrangement system provided by the present invention, at least one sensor assembly is arranged on the robot body, wherein the sensor assembly comprises an image sensor and a first inertial sensor and the positions of the image sensor relative to the first inertial sensor are fixed, so that the image sensors and the first inertial sensor do not move as the external physical conditions, such as vibration and temperature change. The included angle between the positions of the image sensor and the vertical axis is in the first angle range to ensure that the robot can autonomously perceive the surrounding environment to improve the capability of autonomous obstacle avoidance and the robustness of the robot system.

## Claims

1. A robot sensor arrangement system, comprising a robot body (20) on which at least one sensor assembly is arranged, whereby the sensor assembly comprises an image sensor (1001, 1002) and a first inertial sensor (1007) of which a position relative to the image sensor (1001, 1002) is fixed;
an included angle between a plane where the image sensor (1001, 1002) is located and a vertical axis is in a first angle range, so as to ensure that similar texture structures of ground peripheral images are continuously collected, wherein the first angle range is 5° - 90°;
wherein the image sensor (1001, 1002) comprises a visible light image sensor (1002) and a depth image sensor (1001) of which the position relative to the visible light image sensor (1002) is fixed; the distances from the depth image sensor (1001) and the visible light image sensor (1002) to the ground are in a first distance value range, wherein the first distance value range is 50 cm - 160 cm, so that the field of view of the depth image sensor (1001) and the visible light image sensor (1002) covers a collection scope;
wherein the visible light image sensor and the first inertial sensor are fixed on at least one piece of rigid material, such that the image sensor and the first inertial sensor do not move as external physical conditions change, the external physical conditions comprising vibration and temperature.

2. The robot sensor arrangement system according to claim 1, wherein the sensor assembly comprises: an optical ranging sensor (1004), a second inertial sensor (1006) and a mechanical odometer (1005) of which the positions relative to each other are fixed;
the mechanical odometer (1005) is fixed inside a robot wheel, and the optical ranging sensor (1004) and the second inertial sensor (1006) are on the same plane or the vertical distance between the optical ranging sensor (1004) and the second inertial sensor (1006) is in a second distance value range.

3. The robot sensor arrangement system according to claim 2, wherein the second distance value range is 0 - 40 cm.

4. The robot sensor arrangement system according to claim 3, wherein the sensor assembly comprises an ultrasonic sensor (1003) of which the position relative to the optical ranging sensor (1004) is fixed, the collection direction of the ultrasonic sensor (1003) is the same as that of the optical ranging sensor (1004), the position of the ultrasonic sensor (1003) is based on the scanning plane of the optical ranging sensor (1004), and the distance from the ultrasonic sensor (1003) to the scanning plane is in a third distance value range, so that the ultrasonic sensor (1003) compensates for the optical ranging sensor (1004) in that the optical ranging sensor (1004) does not adequately sense transparent objects.

5. The robot sensor arrangement system according to claim 4, wherein the third distance value range is 0 - 40 cm.

6. The robot sensor arrangement system according to claim 5, wherein the sensors in the sensor assembly are all mounted on a rigid structure and the sensors in the sensor assembly constitute a whole with at least one piece of the rigid structure.

## Patentansprüche

1. Robotersensoranordnungssystem, umfassend einen Roboterkörper (20), an dem mindestens eine Sensoranordnung angeordnet ist, wobei die Sensoranordnung einen Bildsensor (1001, 1002) und einen ersten Trägheitssensor (1007) umfasst, dessen Position relativ zum Bildsensor (1001, 1002) fixiert ist;
wobei ein eingeschlossener Winkel zwischen einer Ebene, in der der Bildsensor (1001, 1002) sich befindet, und einer vertikalen Achse in einem ersten Winkelbereich liegt, um sicherzustellen, dass ähnliche Texturstrukturen von Bodenrandbildern kontinuierlich gesammelt werden, wobei der erste Winkelbereich 5° - 90° beträgt;
wobei der Bildsensor (1001, 1002) einen Bildsensor für sichtbares Licht (1002) und einen Tiefenbildsensor (1001) umfasst, dessen Position relativ zum Bildsensor für sichtbares Licht (1002) fixiert ist; die Abstände des Tiefenbildsensors (1001) und des Bildsensors für sichtbares Licht (1002) zum Boden in einem ersten Abstandswertbereich liegen, wobei der erste Abstandswertbereich 50 cm - 160 cm beträgt, sodass das Sichtfeld des Tiefenbildsensors (1001) und des Bildsensors für sichtbares Licht (1002) einen Erfassungsbereich abdeckt;
wobei der Bildsensor für sichtbares Licht und der erste Trägheitssensor an mindestens einem Stück starren Materials fixiert sind, sodass sich der Bildsensor und der erste Trägheitssensor nicht bewegen, wenn sich die äußeren physikalischen Bedingungen ändern, wobei die äußeren physikalischen Bedingungen Vibrationen und Temperatur umfassen.

2. Robotersensoranordnungssystem nach Anspruch 1, wobei die Sensoranordnung Folgendes umfasst: einen optischen Entfernungssensor (1004), einen zweiten Trägheitssensor (1006) und ein mechanischer Wegstreckenzähler (1005), deren Positionen relativ zueinander fixiert sind;
wobei der mechanische Wegstreckenzähler (1005) innerhalb eines Roboterrads fixiert ist und der optische Entfernungssensor (1004) und der zweite Trägheitssensor (1006) auf derselben Ebene liegen oder der vertikale Abstand zwischen dem optischen Entfernungssensor (1004) und dem zweiten Trägheitssensor (1006) in einem zweiten Abstandswertbereich liegt.

3. Robotersensoranordnungssystem nach Anspruch 2, wobei der zweite Abstandswertbereich 0 - 40 cm beträgt.

4. Robotersensoranordnungssystem nach Anspruch 3, wobei die Sensoranordnung einen Ultraschallsensor (1003) umfasst, dessen Position relativ zum optischen Entfernungssensor (1004) fixiert ist, die Erfassungsrichtung des Ultraschallsensors (1003) die gleiche ist wie die des optischen Entfernungssensors (1004), die Position des Ultraschallsensors (1003) auf der Abtastebene des optischen Entfernungssensors (1004) basiert, und der Abstand des Ultraschallsensors (1003) zur Abtastebene in einem dritten Abstandswertbereich liegt, sodass der Ultraschallsensor (1003) den optischen Entfernungssensor (1004) kompensiert, wenn der optische Entfernungssensor (1004) transparente Objekte nicht adäquat erkennt.

5. Robotersensoranordnungssystem nach Anspruch 4, wobei der dritte Abstandswertbereich 0 - 40 cm beträgt.

6. Robotersensoranordnungssystem nach Anspruch 5, wobei die Sensoren in der Sensoranordnung alle an einer starren Struktur befestigt sind und die Sensoren in der Sensoranordnung mit mindestens einem Teil der starren Struktur ein Ganzes bilden.

## Revendications

1. Système d'agencement de capteur de robot, comprenant un corps de robot (20) sur lequel est agencé au moins un ensemble capteur, moyennant quoi l'ensemble capteur comprend un capteur d'image (1001, 1002) et un premier capteur inertiel (1007) dont une position par rapport au capteur d'image (1001, 1002) est fixe ;
un angle inclus entre un plan dans lequel le capteur d'image (1001, 1002) est situé et un axe vertical se trouve dans une première plage d'angles, de manière à garantir que des structures de texture similaires d'images périphériques au sol sont collectées en continu, dans lequel la première plage d'angles est de 5° à 90° ;
dans lequel le capteur d'image (1001, 1002) comprend un capteur d'image de lumière visible (1002) et un capteur d'image de profondeur (1001) dont la position par rapport au capteur d'image de lumière visible (1002) est fixe ; les distances du capteur d'image de profondeur (1001) et du capteur d'image de lumière visible (1002) jusqu'au sol se situent dans une première plage de valeurs de distance, dans lequel la première plage de valeurs de distance est de 50 cm à 160 cm, de sorte que le champ de vision du capteur d'image de profondeur (1001) et du capteur d'image de lumière visible (1002) couvre une portée de collecte ;
dans lequel le capteur d'image de lumière visible et le premier capteur inertiel sont fixés sur au moins une pièce de matériau rigide, de sorte que le capteur d'image et le premier capteur inertiel ne bougent pas lorsque des conditions physiques externes changent, les conditions physiques externes comprenant la vibration et la température.

2. Système d'agencement de capteur de robot selon la revendication 1, dans lequel l'ensemble capteur comprend : un capteur de télémétrie optique (1004), un second capteur inertiel (1006) et un odomètre mécanique (1005) dont les positions sont fixes les unes par rapport aux autres ;
l'odomètre mécanique (1005) est fixé à l'intérieur d'une roue de robot, et le capteur de télémétrie optique (1004) et le second capteur inertiel (1006) se trouvent sur le même plan ou la distance verticale entre le capteur de télémétrie optique (1004) et le second capteur inertiel (1006) se trouve dans une deuxième plage de valeurs de distance.

3. Système d'agencement de capteur de robot selon la revendication 2, dans lequel la deuxième plage de valeurs de distance est de 0 à 40 cm.

4. Système d'agencement de capteur de robot selon la revendication 3, dans lequel l'ensemble capteur comprend un capteur à ultrasons (1003) dont la position par rapport au capteur de télémétrie optique (1004) est fixe, la direction de collecte du capteur à ultrasons (1003) est la même que celle du capteur de télémétrie optique (1004), la position du capteur à ultrasons (1003) est basée sur le plan de balayage du capteur de télémétrie optique (1004), et la distance entre le capteur à ultrasons (1003) et le plan de balayage se trouve dans une troisième plage de valeurs de distance, de sorte que le capteur à ultrasons (1003) compense le capteur de télémétrie optique (1004) lorsque le capteur de télémétrie optique (1004) ne détecte pas de manière adéquate des objets transparents.

5. Système d'agencement de capteur de robot selon la revendication 4, dans lequel la troisième plage de valeurs de distance est de 0 à 40 cm.

6. Système d'agencement de capteur de robot selon la revendication 5, dans lequel les capteurs dans l'ensemble capteur sont tous montés sur une structure rigide et les capteurs dans l'ensemble capteur constituent un tout avec au moins une pièce de la structure rigide.
